# EUROPEAN PATENT APPLICATION

(11) **EP 4 312 290 A1**
(43) Date of publication of application: **31.01.2024**
(21) Application number: 22929210.7
(22) Date of filing: 31.05.2022
(51) Int. Cl.: H01M 4/48

(54) **LITHIUM NICKEL MANGANATE POSITIVE ELECTRODE ACTIVE MATERIAL, AND PREPARATION METHOD FOR SAME AND SECONDARY BATTERY USING SAME**

(71) Applicant: Contemporary Amperex Technology Co., Limited, Ningde City, Fujian 352100 (CN)
(72) Inventor: ZHANG, Zhenguo, Ningde Fujian 352100 (CN); WANG, Sihui, Ningde Fujian 352100 (CN); FAN, Jingpeng, Ningde Fujian 352100 (CN); LIU, Na, Ningde Fujian 352100 (CN)
(74) Representative: Gong, Jinping
(86) International application number: PCT/CN2022/096216
(87) International publication number: WO 2023/230832

(57) **Abstract**

The present application provides a positive electrode active material of Li₁₊ₓNi_{y}M_{z}Mn_{2-x-y-z}O₄₋ₖ, -0.1<x<0.2, 0.4<y<0.6, 0<z<0.2, M is one or more of Cr, Mo, Nb, Ru, P, S, Ta, W, Tl, and Ti, and in a first-cycle charging curve of a half battery of the positive electrode active material, a ratio of a charging capacity of 3.5 V-4.4 V to a charging capacity of 3.5 V-4.95 V is A, A meets 0.04<A<0.3, a product of k and A meets 0<kA<0.015, and the first-cycle charging curve is measured at a rate of 0.1 C. The positive electrode active material of the present application balances high kinetic performance and high chemical stability, and a corresponding secondary battery has both high-rate discharge capability and long-term storage stability.

## Description

### Technical Field

The present application relates to a lithium nickel manganese oxide positive electrode active material for a secondary battery and a preparation method thereof, as well as a secondary battery, battery module, battery pack, and electrical apparatus using the lithium nickel manganese oxide positive electrode active material.

### Background

In recent years, a secondary battery is widely used in energy storage power source systems such as hydro power, thermal power, wind power and solar power stations, as well as in various fields such as an electric tool, an electric bicycle, an electric motorcycle, an electric vehicle, military equipment, and aerospace, and users put forward higher requirements for its comprehensive performance such as high-rate discharge capability and long-term storage stability.

A positive electrode active material is a key factor that restricts the high-rate discharge capability and storage stability improvement of the secondary battery. Therefore, it is urgent to develop a positive electrode active material with high kinetic performance and high chemical stability.

### Summary of the Invention

The present application is performed in view of the above technical problems, and aims to provide a lithium nickel manganese oxide positive electrode active material of a spinel structure with high kinetic performance and high chemical stability, so that it can be balanced to improve the high-rate discharge capability and the long-term storage stability of a secondary battery using the lithium nickel manganese oxide positive electrode active material.

To achieve the above objective, a first aspect of the present application provides a lithium nickel manganese oxide positive electrode active material, wherein
a composition formula of the positive electrode active material is Liᵢ₊ₓNi_{y}M_{z}Mn_{2-x-y-z}O₄₋ₖ, - 0.1≤x≤0.2, 0.4<y<0.6, 0≤z≤0.2, and M is one or more of Cr, Mo, Nb, Ru, P, S, Ta, W, Tl, and Ti; and
in a first-cycle charging curve of a half battery of the positive electrode active material, a ratio of a charging capacity of 3.5 V-4.4 V to a charging capacity of 3.5 V-4.95 V is A, A meets 0.04<A<0.3, and a product of k and A meets 0≤kA≤0.015, wherein the first-cycle charging curve is measured at a rate of 0.1 C.

As a result, the obtained lithium nickel manganese oxide positive electrode active material balances high kinetic performance and high chemical stability, and a corresponding secondary battery has both high-rate discharge capability and long-term storage stability.

In any of embodiments, the lithium nickel manganese oxide positive electrode active material of the spinel structure of the present application further meets: 0.11<k+A<0.18, optionally, 0.11≤k+A≤0.15. This is because when an A value is larger, a content of Mn³⁺in the corresponding lithium nickel manganese oxide positive electrode active material of the spinel structure is higher, and dissolution of transition metal manganese is prone to occur, thereby reducing the chemical stability of the material. Therefore, the smaller k value can improve the chemical stability of the material, so that the material has both good kinetic performance and chemical stability, and the corresponding secondary battery has both excellent high-rate discharge capability and long-term storage stability.

In any of embodiments, the lithium nickel manganese oxide positive electrode active material of the spinel structure of the present application further meets: 0.07<A<0.15. As a result, the obtained lithium nickel manganese oxide positive electrode active material has the further improved kinetic performance, and the high-rate discharge capability of the corresponding secondary battery is improved.

In any of embodiments, the lithium nickel manganese oxide positive electrode active material of the spinel structure of the present application further meets: 0≤k≤0.1, optionally, 0≤k≤0.05, optionally, 0<k<0.03. As a result, the obtained lithium nickel manganese oxide positive electrode active material has the further improved chemical stability, and the long-term storage stability of the corresponding secondary battery is improved.

In any of embodiments, the lithium nickel manganese oxide positive electrode active material of the spinel structure of the present application further meets: 0<z<0.2, optionally, 0.001<z<0.15.

By controlling the content of the above M element in an appropriate range of 0<z<0.2, it is easier to achieve comprehensive and uniform doping, thereby better balancing the kinetic performance and the long-term use stability of the material. Furthermore, optionally, 0<z<0.2, optionally, 0.001<z<0.15.

In any of embodiments, M is further selected from one or more than two of Nb, Ru, P, Ta and Tl. As a result, an oxygen defect content may be further reduced, the chemical stability of the material may be improved, and the long-term storage stability of the secondary battery using the lithium nickel manganese oxide positive electrode active material may be improved.

In any of embodiments, the lithium nickel manganese oxide positive electrode active material of the spinel structure of the present application further meets: the lithium nickel manganese oxide positive electrode active material is single crystal and/or single crystal-like particles. As a result, the chemical stability of the positive electrode active material is further improved, and then the long-term storage performance of the secondary battery using the positive electrode active material is further improved.

In any of embodiments, the lithium nickel manganese oxide positive electrode active material of the spinel structure of the present application further meets: a volume median particle diameter (D_{V50}) of the particles meets 1 µm<D_{V50}≤20 µm, optionally, 2 µm≤D_{V50}≤15 µm. When the crystal grain is larger, the exposed surface is smaller, and the contact area with the electrolyte solution is small, so the stability of the lithium nickel manganese oxide positive electrode active material is improved, but on the other hand, the excessive grain size may deteriorate its kinetic performance.

In any of embodiments, the lithium nickel manganese oxide positive electrode active material of the spinel structure of the present application further meets: 0.06≤(k+A)/(D_{V50}^{0.3})≤0.12, optionally, 0.06≤(k+A)/(D_{V50}^{0.3})≤0.10, where a (k+A)/ (D_{V5}^{0.3}) is in µm^{-0.3}. By balancing k, A, and Dvsoaccording to the above relational formula, it is more conducive to balance the high-rate discharge performance and the long-term storage stability of the secondary battery of the lithium nickel manganese oxide positive electrode active material of the spinel structure.

In any of embodiments, the lithium nickel manganese oxide positive electrode active material of the spinel structure of the present application further meets: based on a total weight of an M element, more than 80% of the M element is located within a first 50% volume of the particles of the positive electrode active material, optionally, within a first 30% volume, in a radial direction from a surface layer of the particles of the positive electrode active material to its geometric center. As a result, by concentrating doping elements on the surface layer, the surface stabilizing effect of the doping elements on the positive electrode active material can be further improved, the oxygen defect content can be further reduced, the surface stability of the material can be improved, and the long-term storage stability of the secondary battery using the positive electrode active material can be improved.

A second aspect of the present application further provides a preparation method of a lithium nickel manganese oxide positive electrode active material, including the following steps:
S1: providing a compound or mixture containing lithium, nickel, and manganese, optionally, the compound or mixture containing an M element; and
S2: heating up the compound or mixture to 800-900°C in a furnace atmosphere where a pressure in a furnace is a positive pressure relative to an atmospheric pressure and an oxygen partial pressure ratio is >50%, for heat treatment for 5-20 hours to obtain the positive electrode active material, wherein
a composition formula of the positive electrode active material is Liᵢ₊ₓNi_{y}M_{z}Mn_{2-x-y-z}O₄₋ₖ, - 0.1≤x≤0.2, 0.4<y<0.6, 0≤z≤0.2, and M is one or more of Cr, Mo, Nb, Ru, P, S, Ta, W, Tl, and Ti; and
in a first-cycle charging curve of a half battery of the positive electrode active material, a ratio A of a charging capacity of 3.5 V-4.4 V to a charging capacity of 3.5 V-4.95 V meets 0.04<A<0.3, and a product of k and A meets 0<kA<0.015, wherein the first-cycle charging curve is measured at a rate of 0.1 C.

In any of embodiments, in S2, the oxygen partial pressure ratio is 80%-100%.

In any of embodiments, in S1, the compound or mixture containing the lithium, the nickel, and the manganese is subjected to heat treatment in an oxygen containing atmosphere at 800-1100°C for 5-50 hours.

In any of embodiments, a nickel-manganese raw material in the mixture containing the lithium, the nickel, and the manganese is selected from one or more than two of Ni_{y}Mn_{2-x-y-z}(OH)_{4-2x-2z}, Ni_{y}Mn_{2-x-y-z}(CO₃)_{2-x-z}, Ni_{y}Mn_{2-x-y-z}O_{2-x-z}, Ni_{y}Mn_{2-x-y-z}O_{4-2x-2z}, (Ni_{y}Mn_{2-x-y-z})₃O_{4-2x-2z}, and Ni_{y}Mn_{2-x-y-z}[O(OH)]_{2-x-z}, -0.1≤x≤0.2, 0.4<y<0.6, and 0≤z≤0.2.

The lithium nickel manganese oxide positive electrode active material of the spinel structure prepared by the above preparation method of the present application has the excellent kinetic performance and chemical stability.

A third aspect of the present application further provides a secondary battery, including the lithium nickel manganese oxide positive electrode active material of the first aspect or the lithium nickel manganese oxide positive electrode active material obtained by the preparation method of the second aspect. A high-rate discharge capability and long-term storage stability of the secondary battery are significantly improved.

A fourth aspect of the present application further provides a battery module, including the secondary battery of the third aspect.

A fifth aspect of the present application provides a battery pack, including the battery module of the fourth aspect.

A sixth aspect of the present application provides an electrical apparatus, including at least one selected from the secondary battery of the third aspect of the present application, the battery module of the fourth aspect of the present application, or the battery pack of the fifth aspect of the present application.

The battery module, battery pack, and electrical apparatus of the present application include a secondary battery cell of the present application, and thus have the same advantages as those of the secondary battery cell of the present application.

### Description of Drawings

Fig. 1 is a schematic diagram of a secondary battery according to an embodiment of the present application.
Fig. 2 is an exploded view of a secondary battery according to an embodiment of the present application shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded view of a battery pack according to an embodiment of the present application shown in Fig. 4.
Fig. 6 is a schematic diagram of an electrical apparatus according to an embodiment of the present application.

Description of reference numerals: 1 Battery pack; 2 Upper box body; 3 Lower box body; 4 Battery module; 5 Secondary battery; 51 Case; 52 Electrode assembly; and 53 Top cover assembly.

### Detailed Description

Hereinafter, the embodiments of the secondary battery, battery module, battery pack and electrical apparatus of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specified, the terms "include/including" and "comprise/comprising" mentioned in the present application may be open-ended or closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is met by any of the following: A is true (or present) and B is false (or absent); A is false (or absent) and B is true (or present); or both A and B are true (or present).

A lithium nickel manganese oxide positive electrode active material, especially a lithium nickel manganese oxide positive electrode active material of a spinel structure, is an excellent positive electrode active material with a high-voltage characteristic, and has great commercial value. According to the current cognitive rules of those skilled in the art, the lithium nickel manganese oxide positive electrode active material in the prior art has the following characteristics: there are two space group structures of a nickel manganese disordered phase Fd3m and a nickel manganese ordered phase P4₃32 in the lithium nickel manganese oxide positive electrode active material of the spinel structure. Because of the disorder of the Fd3m space group structure and the presence of more +3 valence manganese elements, when a proportion of the Fd3m structure is high, a lithium manganate material of the spinel structure has stronger lithium ion electrical conductivity, and thus has stronger discharge capability at a high rate. However, when the proportion of the Fd3m structure is high, surface oxygen defects of the lithium nickel manganese oxide positive electrode active material of the spinel structure are more. According to the current cognitive rules of those skilled in the art, when the surface oxygen defects of the lithium nickel manganese oxide positive electrode active material of the spinel structure are more, side reactions between the lithium nickel manganese oxide positive electrode active material and an electrolyte solution (such as transition metal manganese dissolution, and consumption of electrolyte solution for gas production) are more significant, which in turn leads to poor long-term storage performance of a secondary battery. That is to say, the lithium nickel manganese oxide positive electrode active material of the spinel structure in the prior art always cannot balance high kinetic performance and high chemical stability.

Based on this, the present application develops a lithium nickel manganese oxide positive electrode active material of the spinel structure with the high kinetic performance and the high chemical stability by reasonably regulating and controlling a preparation process, so that the secondary battery using the positive electrode active material simultaneously has both high-rate discharge capability and long-term storage stability performance.

### [Positive electrode active material]

Based on this, a first aspect of an embodiment of the present application provides a lithium nickel manganese oxide positive electrode active material, and a composition formula of the positive electrode active material is Li₁₊ₓNi_{y}M_{z}Mn_{2-x-y-z}O₄₋ₖ, -0.1≤x≤0.2, 0.4≤y≤0.6, 0<z<0.2, and M is one or more of Cr, Mo, Nb, Ru, P, S, Ta, W, Tl, and Ti; and
in a first-cycle charging curve of a half battery of the positive electrode active material, a ratio of a charging capacity of 3.5 V-4.4 V to a charging capacity of 3.5 V-4.95 V is A, A meets 0.04<A<0.3, and a product of k and A meets 0≤kA≤0.015, wherein the first-cycle charging curve is measured at a rate of 0.1 C.

As mentioned above, when a proportion of an Fd3m structure in a lithium manganate material of a spinel structure is higher, the lithium manganate material of the spinel structure has a stronger discharge capability at a high rate. In the lithium manganate material of the spinel structure according to the first aspect of the present application, the proportion of the Fd3m structure in the lithium manganate material of the spinel structure is significantly increased, thereby significantly improving a lithium ion electrical conductivity of the lithium nickel manganese oxide positive electrode active material of the spinel structure, significantly improving the kinetic performance of the lithium nickel manganese oxide positive electrode active material of the spinel structure, and thus significantly improving a high-rate discharge capability of a secondary battery prepared from the lithium nickel manganese oxide positive electrode active material of the spinel structure.

In the present application, an inventor creatively found that the proportion of the Fd3m structure in the lithium nickel manganese oxide positive electrode active material can be represented by A. A measuring method of the A is as follows: in the first-cycle charging curve of the half battery of the positive electrode active material, the ratio of the charging capacity of 3.5 V-4.4 V to the charging capacity of 3.5 V-4.95 V, wherein when the first-cycle charging curve is tested, lithium is first used as a negative electrode, and the lithium nickel manganese oxide positive electrode active material of the spinel structure of the present application is used as a positive electrode to prepare a button-type half battery, then the button-type half battery is charged to a voltage of 4.95 V at the rate of 0.1 C, and then the first-cycle charging curve is obtained. By using the obtained first-cycle charging curve, the charging capacity of 3.5 V-4.4 V and the charging capacity of 3.5 V-4.95 V is calculated, and a value of A is the ratio of the charging capacity of 3.5 V-4.4 V to the charging capacity of 3.5 V-4.95 V.

Further reasons that the value of A can characterize the proportion of the Fd3m structure in the lithium nickel manganese oxide positive electrode active material are as follows: in the Fd3m structure, due to a high content of Mn³⁺, in addition to a potential valence state change of Ni²⁺/Ni³⁺/Ni⁴⁺ that may occur in all the lithium nickel manganese oxide positive electrode materials in a charging process, there will also be a unique valence state change of Mn³⁺/Mn⁴⁺ in lithium nickel manganese oxide of the Fd3m structure, this change in elemental valence states results in a voltage platform within a range of 3.5 V-4.4 V in the charging curve, and therefore, the ratio A of the charging capacity corresponding to the voltage platform to the charging capacity corresponding to 3.5 V-4.95 V can characterize the proportion of the Fd3m structure in the lithium nickel manganese oxide positive electrode active material.

Furthermore, the A value of the lithium nickel manganese oxide positive electrode active material of the spinel structure of the present application meets 0.04<A<0.3. When A meets 0.04<A<0.3, almost all the lithium nickel manganese oxide positive electrode active materials of the spinel structure are the Fd3m structure, the proportion of the Fd3m structure in the lithium nickel manganese oxide positive electrode active material of the spinel structure is increased, the lithium nickel manganese oxide positive electrode active material of the spinel structure has the significantly improved kinetic performance, and thus the high-rate discharge capability of the secondary battery prepared from the lithium nickel manganese oxide positive electrode active material of the spinel structure is significantly improved.

The positive electrode active material of the present application has a composition formula of Li₁₊ₓNi_{y}M_{z}Mn_{2-x-y-z}O₄₋ₖ, -0.1≤x≤0.2, 0.4<y<0.6, and 0<z<0.2. In the composition formula, "1+x" represents the number of moles of lithium atoms in the composition formula, "y" represents the number of moles of nickel atoms in the composition formula, and "z" represents the number of moles of M atoms in the composition formula. "4-k" represents the number of moles of oxygen atoms in the composition formula.

Wherein, "k" represents a quantitative index of surface oxygen defects in the lithium nickel manganese oxide of the spinel structure with the composition formula, that is, the size of k can characterize chemical stability of the lithium nickel manganese oxide positive electrode active material of the spinel structure of the present application, and further can affect long-term storage stability of the secondary battery prepared from the lithium nickel manganese oxide positive electrode active material of the spinel structure.

Furthermore, a k value of the lithium nickel manganese oxide positive electrode active material of the spinel structure of the present application meets the following condition: the product of k and A meets 0<kA<0.015. The product kA of k and A can comprehensively characterize comprehensive performance of the lithium nickel manganese oxide positive electrode active material of the spinel structure in terms of chemical stability and kinetic performance. Specifically, when A is larger, it shows that the proportion of the Fd3m structure in the lithium nickel manganese oxide positive electrode active material of the spinel structure is high, and the kinetic performance is good. However, if a k value is too large at this time, the corresponding lithium nickel manganese oxide positive electrode active material of the spinel structure have many surface oxygen defects, and the chemical stability of the material is poor, which cannot comprehensively balance the kinetic performance and the chemical stability of the material. After a lot of experiments, when the lithium nickel manganese oxide positive electrode active material of the spine structure meets a relationship of 0<kA<0.015, the lithium nickel manganese oxide positive electrode active material of the spine structure has excellent comprehensive performance, and has both good kinetic performance and chemical stability, and the secondary battery prepared therefrom has both excellent high-rate discharge performance and long-term storage stability.

In some embodiments, the lithium nickel manganese oxide positive electrode active material of the spinel structure of the present application further meets: 0.11<k+A<0.18, optionally, 0.11≤k+A≤0.15. This is because when an A value is larger, a content of Mn³⁺in the corresponding lithium nickel manganese oxide positive electrode active material of the spinel structure is higher, and dissolution of transition metal manganese is prone to occur, thereby reducing the chemical stability of the material. Therefore, the smaller k value can improve the chemical stability of the material, so that the material has both good kinetic performance and chemical stability, and the corresponding secondary battery has both excellent high-rate discharge capability and long-term storage stability.

In some embodiments, the lithium nickel manganese oxide positive electrode active material of the spinel structure of the present application further meets: 0≤k≤0.1, optionally, 0≤k≤0.05, optionally, 0≤k≤0.03. The smaller the k value, the less surface oxygen defects of spinel lithium manganate. By reducing the oxygen defects, the chemical stability of the material can be significantly improved, a side reaction between the positive electrode material and the electrolyte solution can be slowed down, the dissolution of Mn and consumption the electrolyte solution can be slowed down, and the long-term storage stability of the secondary battery can be improved.

In some embodiments, when z is not 0, the lithium manganate material of the spinel- structure contains a doping element M, the doping element M can form a strong bond with oxygen, which is not only beneficial to the synthesis of a Fd3m structure with low oxygen defect, and can further improve the structural stability of the material, thereby better improving the long-term use stability of the secondary battery while balancing the high kinetic performance.

Furthermore, by controlling the content of the above M element in an appropriate range of 0<z<0.2, it is easier to achieve comprehensive and uniform doping, thereby better balancing the kinetic performance and the long-term use stability of the material. Furthermore, optionally, 0.001<z<0.15.

In some embodiments, M is further selected from one or more than two of Nb, Ru, P, Ta and Tl. As a result, the oxygen defect content may be further reduced, the surface stability of the material may be improved, and the long-term storage stability of the secondary battery using the lithium nickel manganese oxide positive electrode active material may be improved.

In some embodiments, the lithium nickel manganese oxide positive electrode active material of the spinel structure of the present application further meets: 0.07<A<0.15.

With the increase of A, the lithium nickel manganese oxide positive electrode active material of the spinel structure has the Fd3m structure with a higher proportion, and the kinetic performance of the material is improved, thereby improving the high-rate charge and discharge capability of the secondary battery. However, when A is too large, the proportion of the Fd3m structure of the lithium nickel manganese oxide positive electrode active material of the spinel structure is too high, resulting in a decrease in the total energy density of the secondary battery using the positive electrode active material.

In some embodiments, the lithium nickel manganese oxide positive electrode active material is single crystal and/or single crystal-like particles. "Single crystal-like" refers to a material of a cohesive structure of an aggregate-like morphology formed by several to more than a dozen grains, and the material with the single crystal-like morphology has the advantages of being easy to synthesize and reducing crystal boundaries of secondary spherical particles.

Since there are a large number of crystal boundaries inside the polycrystalline particles, the crystal boundaries are prone to crack after being stressed, thereby exposing an unstable surface, aggravating the side reaction with the electrolyte solution, and resulting in performance deterioration. Therefore, the single crystal and/or single crystal-like lithium nickel manganese oxide material can effectively avoid or reduce these problems, thereby further improving the surface stability of the positive electrode active material, and further improving the long-term storage performance of the secondary battery using the positive electrode active material.

In some embodiments, from a point of view that it is easier to balance the lower k value and the higher A value, a volume median particle diameter (D_{V50}) of the lithium nickel manganese oxide material particles of the spinel structure meets spinel structure 1 µm≤D_{V50}≤20 µm, optionally, 2 µm≤D_{V50}≤15 µm. When the crystal grain is larger, the exposed surface is smaller, and the contact area with the electrolyte solution is small, so the stability of the lithium nickel manganese oxide positive electrode active material is improved, but on the other hand, the excessive grain size may deteriorate its kinetic performance.

In some embodiments, the lithium nickel manganese oxide positive electrode active material of the spinel structure of the present application further meets: 0.06≤(k+A)/(D_{V50}^{0.3})≤0.12, optionally, 0.06≤(k+A)/(D_{V50}^{0.3})≤0.10, where a (k+A)/ (D_{V50}^{0.3}) is in µm^{-0.3}. When the crystal grain is larger, the exposed surface is smaller, and the contact area with the electrolyte solution is small, so the stability of the lithium nickel manganese oxide positive electrode active material is improved, but on the other hand, the excessive grain size may deteriorate its kinetic performance. Therefore, the lithium nickel manganese oxide positive electrode active material of the spinel structure requires a higher proportion of Fd3m structure. In addition, if there are a small amount of oxygen defects (manifested as an increase in the k value) that promote ion transfer inside the particles (non surface layer), it will also have a certain promoting effect on the overall kinetic performance. It is found through experiments that by balancing k, A, and Dvsoaccording to the above relational formula, it is more conducive to balance the high-rate discharge performance and the long-term storage stability of the secondary battery of the lithium nickel manganese oxide positive electrode active material of the spinel structure.

In some embodiments, as for the lithium nickel manganese oxide positive electrode active material of the spinel structure of the present application, based on a total weight of an M element, more than 80% of the M element is located within a first 50% volume of the particles of the positive electrode active material, optionally, within a first 30% volume, in a radial direction from a surface layer of the particles of the positive electrode active material to its geometric center.

As a result, by concentrating doping elements on the surface layer, the surface stabilizing effect of the doping elements on the positive electrode active material can be further improved, the oxygen defect content can be further reduced, the surface stability of the material can be improved, and the long-term storage stability of the secondary battery using the positive electrode active material can be improved.

In some embodiments, the grain shape of the lithium nickel manganese oxide positive electrode active material is an octahedron, a truncated octahedron, or a regular shape of an octahedron subjected to sharpening and edge flattening. The so-called truncated octahedron or the regular shape of the octahedron subjected to sharpening and edge flattening refers to a shape in which the octahedron's vertices are truncated, or the octahedron's edges are flattened, but the main crystal plane orientation of the octahedron is retained. The grain shape of the octahedron or the octahedron subjected to sharpening and edge flattening indicates that the grain surface is a crystal plane with optimal kinetic performance and relatively stable, thereby improving the kinetic performance of the positive electrode active material and reducing the surface side reactions of the positive electrode active material, and thus further improving the high-rate discharge capability of the secondary battery using the positive electrode active material.

### [Preparation method of a positive electrode active material]

A second aspect of an embodiment of the present application provides a preparation method of a lithium nickel manganese oxide positive electrode active material, including the following procedures S1 and S2.
S1: providing a compound or mixture containing lithium, nickel, and manganese, optionally, the compound or mixture containing an M element; and
S2: heating up the compound or mixture to 800-900°C in a furnace atmosphere where a pressure in a furnace is a positive pressure relative to an atmospheric pressure and an oxygen partial pressure ratio is >50%, for heat treatment for 5-20 hours to obtain the positive electrode active material, wherein
a composition formula of the positive electrode active material is Liᵢ₊ₓNi_{y}M_{z}Mn_{2-x-y-z}O₄₋ₖ, - 0.1≤x≤0.2, 0.4<y<0.6, 0≤z≤0.2, and M is one or more of Cr, Mo, Nb, Ru, P, S, Ta, W, Tl, and Ti; and
in a first-cycle charging curve of a half battery of the positive electrode active material, a ratio A of a charging capacity of 3.5 V-4.4 V to a charging capacity of 3.5 V-4.95 V meets 0.04<A<0.3, and a product of k and A meets 0<kA<0.015, wherein the first-cycle charging curve is measured at a rate of 0.1 C.

In step S1, "the compound of lithium, nickel, and manganese" refer to a raw material containing the lithium, the nickel, and the manganese at the same time; and "the mixture of lithium, nickel, and manganese" refer to a mixed material containing the three elements of the lithium, the nickel, and the manganese at the same time and formed by physically mixing a lithium-containing raw material, a nickel-containing raw material, a manganese-containing raw material, or a raw material containing any two elements of the lithium, the nickel, and the manganese.

In step S2, the higher the heat treatment temperature, the more conducive to the formation of the Fd3m space group structure, but the more prone it is to form surface oxygen defects, so the heat treatment temperature is limited to 800-900°C for 5-20 hours. In addition, by performing the heat treatment in the furnace atmosphere where the pressure in the furnace is the positive pressure relative to the atmospheric pressure and the oxygen partial pressure ratio is >50%, the formation of the surface oxygen defects can be minimized; and furthermore, through appropriate heat treatment time, the lithium nickel manganese oxide positive electrode active material of the spinel structure having the Fd3m with a higher content ratio but low content of surface oxygen defects can be obtained.

In some embodiments, in step S1, powder containing an M source is further mixed, and the M is one or more of Cr, Mo, Nb, Ru, P, S, Ta, W, T1 and Ti. These M elements may form strong bonds with oxygen, which not only facilitates the synthesis of the Fd3m structure with the low oxygen defect, but also further improves the structural stability of the material, thereby better improving the long-term use stability of the battery while balancing the kinetic performance. From a point of view of further reducing the oxygen defect content, the M element is preferably selected from one or more than two of Nb, Ru, P, Ta, and Tl.

In some embodiments, in order to better reduce the oxygen defects, in step S2, the oxygen partial pressure ratio is optionally 80%-100%.

In some embodiments, step Slincludes a pre-sintering process. The compound or mixture containing the lithium, the nickel, and the manganese is subjected to heat treatment in an oxygen containing atmosphere at 800-1100°C for 5-50 hours. Since the temperature, atmosphere and sintering time need to be precisely controlled in step S2, the target grain size may not necessarily be achieved, especially the demand for large-sized grains. Therefore, in order to obtain the grains of the target size, pre-sintering may be performed by heat treatment at 800-1 100°C for 5-50 hours in the oxygen-containing atmosphere, so as to prepare a product that meets the target grain size first, and then perform a formal sintering process to obtain the lithium nickel manganese oxide positive electrode active material with the low surface oxygen defect content and the high proportion of Fd3m structure.

In some embodiments, before performing step S2, the compound or mixture containing the lithium, the nickel and the manganese or a pre-sintered powder may further be crushed using a pulverizer to obtain a crushed powder. The crushing process can reduce the particle diameter of the powder and improve the dispersion, so that the single crystal-like may be dispersed into particles closer to the single crystal.

In some embodiments, a nickel-manganese raw material in the mixture containing the lithium, the nickel, and the manganese is selected from one or more than two of Ni_{y}Mn_{2-x-y-z}(OH)_{4-2x-2z}, Ni_{y}Mn_{2-x-y-z}(CO₃)_{2-x-z}, Ni_{y}Mn_{2-x-y-z}O_{2-x-z}, Ni_{y}Mn_{2-x-y-z}O_{4-2x-2z}, (Ni_{y}Mn_{2-x-y-z})₃O_{4-2x-2z}, and Ni_{y}Mn_{2-x-y-z}[O(OH)]_{2-x-z}, -0.1≤x≤0.2, 0.4<y<0.6, and 0≤z≤0.2.

### [Secondary battery]

In an embodiment of the present application, a secondary battery is provided.

Generally, the secondary battery includes a positive electrode sheet, a negative electrode sheet, an electrolyte, and a separator. In charging and discharging processes of the battery, active ions are intercalated and deintercalated back and forth between the positive electrode sheet and the negative electrode sheet. The electrolyte plays a role in conduct ions between the positive electrode sheet and the negative electrode sheet. The separator is arranged between the positive electrode sheet and the negative electrode sheet, and mainly plays a role in preventing a short circuit between a positive electrode and a negative electrode while allowing ions to pass through. The secondary battery may be a lithium-ion battery.

### [Positive electrode sheet]

The positive electrode sheet includes a positive electrode current collector and a positive electrode film layer arranged on at least one surface of the positive electrode current collector, wherein the positive electrode film layer includes the above lithium nickel manganese oxide positive electrode active material of the spinel structure or the lithium nickel manganese oxide positive electrode active material of the spinel structure prepared according to the above preparation method.

As an example, the positive electrode current collector has two surfaces opposite in its own thickness direction, and the positive electrode film layer is arranged on either or both of the two opposite surfaces of the positive electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector may be formed by forming a metal material (aluminum, an aluminum alloy, nickel, a nickel alloy, titanium, a titanium alloy, silver and a silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the lithium nickel manganese oxide positive electrode active material of the spinel structure of the present application may further be mixed with other positive electrode active materials for the secondary battery known in the art for use, so as to improve electrical performance of the secondary battery. As an example, other positive electrode active material may include any one of the following materials: a lithium-containing phosphate of an olivine structure, a lithium transition metal oxide, and a respective modified compound thereof. However, the present application is not limited to these materials, and other conventional materials useful as positive electrode active materials for batteries may also be used. Among them, examples of the lithium transition metal oxide may include but are not limited to, a lithium-cobalt oxide (such as LiCoO₂), a lithium-nickel oxide (such as LiNi02), a lithium-manganese oxide (such as LiMn02and LiMn₂O₄), a lithium-nickel-cobalt oxide, a lithium-manganese-cobalt oxide, a lithium-nickel-cobalt-manganese oxide (such as LiNi_{1/3}Co_{1/3}Mn_{1/3}O₂ (may also be abbreviated as NCM₃₃₃), LiNi_{0.5}Co_{0.2}Mn_{0.3}O₂(may also be abbreviated as NCM₅₂₃), LiNi_{0.5}Co_{0.25}Mn_{0.25}O₂(may also be abbreviated as NCM₂₁₁), LiNi_{0.6}Co_{0.2}Mn_{0.2}O₂(may also be abbreviated as NCM₆₂₂), LiNi_{0.8}Co_{0.1}Mn_{0.1}O₂ (may also be abbreviated as NCM₈₁₁)), a lithium-nickel-cobalt-aluminum oxide (such as LiNi_{0.85}Co_{0.15}Al_{0.05}O₂) and a modified compound thereof. Examples of the lithium-containing phosphate of the olivine structure may include, but are not limited to, lithium iron phosphate (such as LiFePO₄(may also be abbreviated as LFP)), a composite material of lithium iron phosphate and carbon, lithium manganese phosphate (such as LiMnPO₄), a composite material of lithium manganese phosphate and carbon, lithium iron manganese phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. For example, the conductive agent may include at least one of superconducting carbon, acetylene black, carbon black, ketjen black, a carbon dot, a carbon nanotube, graphene, and a carbon nanofiber.

In some embodiments, the positive electrode sheet may be prepared in a following mode: dispersing the above components for preparing the positive electrode sheet, for example, the positive electrode active material, the conductive agent, a lithium supplement, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode sheet.

### [Negative electrode sheet]

The negative electrode sheet includes a negative electrode current collector and a negative electrode film layer arranged on at least one surface of the negative electrode current collector, wherein the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate. The composite current collector may be formed by forming a metal material (copper, a copper alloy, nickel, a nickel alloy, titanium, a titanium alloy, silver and a silver alloy, etc.) on the high molecular material substrate (such as polypropylene (PP), polyethylene terephthalate (PET), polybutylene terephthalate (PBT), polystyrene (PS), and polyethylene (PE)).

In some embodiments, a negative electrode active material for a battery well known in the art may be used as the negative electrode active material. As an example, the negative electrode active material may include at least one of the following materials: artificial graphite, natural graphite, soft carbon, hard carbon, a silicon-based material, a tin-based material, and lithium titanate, etc. The silicon-based material may be selected from at least one of monatomic silicon, a silicon oxide compound, a silicon-carbon composite, a silicon-nitrogen composite, and a silicon alloy. The tin-based material may be selected from at least one of elemental tin, a tin oxide compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally includes other auxiliaries, for example, a thickener (e. g., sodium carboxymethyl cellulose (CMC-Na)) and the like.

In some embodiments, the negative electrode sheet may be prepared in a following modes: dispersing the above components for preparing the negative electrode sheet, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode sheet.

### [Electrolyte]

The electrolyte plays a role in conduct ions between the positive electrode sheet and the negative electrode sheet. The type of the electrolyte is not particularly limited in the present application, and can be selected according to requirements.

In some embodiments, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from a non-fluorinated solvent and/or a fluorinated solvent, and the non-fluorinated solvent includes one or more of carbonate, carboxylate, sulfones, and ethers. The fluorinated solvent is one or more of fluorocarbonate, fluorocarboxylate, fluorosulfone, and fluoroether, specifically, for example, at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution may further optionally include an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

### [Separator]

In some embodiments, the secondary battery further includes a separator. The type of the separator is not particularly limited in the present application, and any well-known separator with a porous structure having good chemical stability and mechanical stability may be selected.

In some embodiments, the material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode sheet, the negative electrode sheet, and the separator can be prepared into an electrode assembly by a winding process or a stacking process.

In some embodiments, the secondary battery may include an outer package. The outer package may be used to encapsulate the above electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a bag-type soft pack. A material of the soft pack may be plastic, and as plastic, polypropylene, polybutylene terephthalate, and polybutylene succinate may be enumerated.

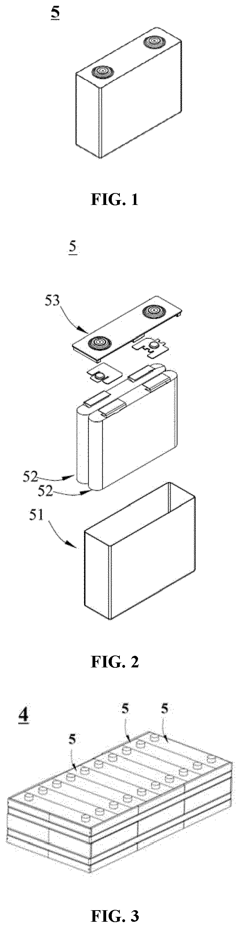

The present application has no particular limitation on the shape of the secondary battery, which may be cylindrical, square or any other shape. For example, Fig. 1 shows a secondary battery 5 with a square structure as an example.

In some embodiments, referring to Fig. 2, the outer package may comprise a case 51 and a cover plate 53. Here, case 51 may include a bottom plate and a side plate connected to the bottom plate, with the bottom plate and the side plate enclosing to form an accommodating cavity. Case 51 has an opening that communicates with the accommodating cavity, and cover plate 53 may cover the opening to close the accommodating cavity. The positive electrode sheet, the negative electrode sheet, and the separator may be formed into electrode assembly 52 by a winding process or a stacking process. Electrode assembly 52 is encapsulated within the accommodating cavity. The electrolyte solution impregnates the electrode assembly 52. The number of electrode assemblies 52 contained in secondary battery 5 may be one or more, which can be selected by those skilled in the art according to specific actual requirements.

In some embodiments, the secondary batteries may be assembled into a battery module, and the number of the secondary batteries included in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, battery module 4 may further include a case having an accommodating space, in which the plurality of secondary batteries 5 are accommodated.

In some embodiments, the above battery module may further be assembled into a battery pack, the number of battery module contained in the battery pack may be one or more, and the specific number can be selected by those skilled in the art according to the use and capacity of the battery pack.

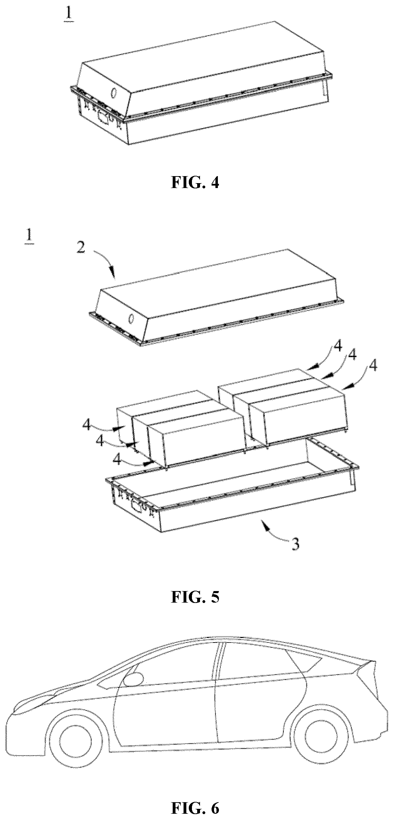

Figs. 4 and 5 show battery pack 1 as an example. Referring to Figs. 4 and 5, battery pack 1 may include a battery box and a plurality of battery modules 4 arranged in the battery box. The battery box includes upper box body 2 and lower box body 3, upper box body 2 can cover lower box body 3 to form a closed space for accommodating battery modules 4. The plurality of battery modules 4 may be arranged in the battery box in any manner.

In addition, the present application further provides an electrical apparatus, and the electrical apparatus includes at least one of the secondary battery, the battery module, or the battery pack provided by the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 is an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described hereinafter. The examples described below are exemplary and only used to explain the present application, and are not to be construed as limiting the present application. Where specific techniques or conditions are not specified in the examples, the techniques or conditions described in the literatures of the art or the product specifications are followed. All of the used agents or instruments which are not specified with the manufacturer are conventional commercially-available products.

### [Preparation and product parameter testing of a lithium nickel manganese oxide positive electrode active material of a spinel structure]

### Example 1

Li₂CO₃ and Ni_{0.5}Mn_{1.5}(OH)₄ powders are weighed at corresponding stoichiometric ratios according to target composition Li_{1.00}Ni_{0.50}Mn_{1.50}O₄₋ₖ, and then are mixed evenly to obtain a raw material mixture powder. The raw material mixture powder is heated up to 1000°C in an air atmosphere and then subjected to heat preservation for 8 hours for pre-sintering to obtain a pre-sintered powder.

The above pre-sintered powder is heated up to 800°C under a mixed atmosphere of oxygen + nitrogen with a positive pressure being 0.05 Mpa relative to an atmospheric pressure and containing 50% oxygen partial pressure and subjected to heat preservation for 10 hours to obtain a finished spinel lithium nickel manganese oxide.

### Examples 2-10 and Comparative Examples 1-3

The pre-sintered powder obtained in Example 1 above is used, in oxygen + nitrogen mixed gas or air atmosphere with a positive pressure being 0.05 Mpa relative to an atmospheric pressure, a sintering temperature and the oxygen partial pressure are adjusted according to Table 1 to obtain the finished spinel lithium nickel manganese oxide.

### Examples 11-17

Li₂CO₃, Ni_{0.5}Mn_{1.45}(OH)_{3.9} and Cr₂O₃, MoO₃, Nb₂O₅, Ru02, NH₄H₂PO₄, Ta₂O₅, and Tl₂O₃ powders are respectively weighed at corresponding stoichiometric ratios according to target composition Li_{1.00}Ni_{0.50}M_{0.05}Mn_{1.45}O₄₋ₖ shown in Table 1, and then mixed evenly to obtain a raw material mixture powder. The raw material mixture powder is heated up to 1000°C in an air atmosphere and then subjected to heat preservation for 8 hours for pre-sintering to obtain a pre-sintered powder.

The above pre-sintered powder is heated up to 860°C in a mixed gas atmosphere of oxygen + nitrogen with a positive pressure being 0.05 Mpa relative to an atmospheric pressure and an oxygen partial pressure being 80% and subjected to heat preservation for 10 hours to obtain a finished spinel lithium nickel manganese oxide of each Example.

### Examples 18-21 and Comparative Example 4

Li₂CO₃, Ni_{0.5}Mn_{1.5-z}O_{2-z} and Nb205 powders are respectively weighed at corresponding stoichiometric ratios according to target composition Li_{1.00}Ni_{0.50}Nb_{z}Mn_{1.5-z}O₄₋ₖ shown in Table 1, and then are mixed evenly to obtain a raw material mixture powder. The raw material mixture powder is heated up to 1000°C in an air atmosphere and then subjected to heat preservation for 8 hours for pre-sintering to obtain a pre-sintered powder.

The above pre-sintered powder is heated up to 860°C in a mixed gas atmosphere of oxygen + nitrogen with a positive pressure being 0.05 Mpa relative to an atmospheric pressure and an oxygen partial pressure being 80% and subjected to heat preservation for 10 hours to obtain a finished spinel lithium nickel manganese oxide of each Example and Comparative Example.

### Examples 22-25

Li₂CO₃ and Ni_{y}Mn_{2-x-y}(CO₃)₂₋ₓ powders are respectively weighed at corresponding stoichiometric ratios according to target composition Li₁₊ₓNi_{y}Mn_{2-x-y}O₄₋ₖ shown in Table 1, and then are mixed evenly to obtain a raw material mixture powder. The raw material mixture powder is heated up to 1000°C in an air atmosphere and then subjected to heat preservation for 8 hours for pre-sintering to obtain a pre-sintered powder.

The above pre-sintered powder is heated up to 860°C in a mixed gas atmosphere of oxygen + nitrogen with a positive pressure being 0.05 Mpa relative to an atmospheric pressure and an oxygen partial pressure being 80% and subjected to heat preservation for 10 hours to obtain a lithium nickel manganese oxide of each Example.

### Examples 26-30

With corresponding stoichiometric ratios according to target composition Li_{1.00}Ni_{0.50}Mn_{1.50}O₄₋ₖ shown in Table 1, LiOH • H₂O and Ni_{0.5}Mn_{1.5}(OH)₄ powders are respectively weighed, and then mixed evenly to obtain a raw material mixture powder. In addition to Example 26, in other examples, the raw material mixture powder is heated up to the temperature shown in Table 1 in an air atmosphere and then subjected to heat preservation for the corresponding time for pre-sintering to obtain a pre-sintered powder. In Examples 26-28, before sintering, the pre-sintered powder (Examples 27 and 28) or the raw material mixture powder (Example 26) are crushed using a flow pulverizer to obtain a crushed powder.

The obtained pre-sintered powder (Examples 29 and 30) or the crushed body (Examples 26-28) is heated up to the sintering temperature shown in Table 1 in a mixed gas atmosphere of oxygen + nitrogen with a positive pressure being 0.05 Mpa relative to an atmospheric pressure and an oxygen partial pressure being 80% and subjected to heat preservation for the corresponding time to obtain a finished lithium nickel manganese oxide.

### Example 31

Li₂CO₃, Ni_{0.51}Mn_{1.41}(OH)_{3.84}, Nb₂O₅ and Ru02 powders are weighed at corresponding stoichiometric ratios according to target composition Li_{1.03}Ni_{0.51}Nb_{0.03}Ru_{0.02}Mn_{1.41}O₄₋ₖ, and then are mixed evenly to obtain a raw material mixture powder. The raw material mixture powder is heated up to 1000°C in an air atmosphere and then subjected to heat preservation for 8 hours for pre-sintering to obtain a pre-sintered powder.

The above pre-sintered powder is heated up to 860°C in a mixed atmosphere of oxygen + nitrogen with a positive pressure being 0.05 Mpa relative to an atmospheric pressure and an oxygen partial pressure being 99% and subjected to heat preservation for 20 hours to obtain a lithium nickel manganese oxide positive electrode active material of a spinel structure.

**Table 1 Table of process parameters for preparing a lithium nickel manganese oxide positive electrode active material**

| Sample No. | Li₁₊ₓNi_{y}M_{z}Mn_{2-x-y-z}O₄₋ₖ | | | | Pre-sintering | | | Is it broken | Sintering | | |
|---|---|---|---|---|---|---|---|---|---|---|---|
| | x | y | z | M | Temperature /°C | Heat preservation time/h | Atmosphere | | Temperature /°C | Heat preservation time /h | Atmosphere Oxygen content |
| Comparative Example 1 | 0 | 0.5 | 0 | - | 1000 | 8 | Air | - | 670 | 10 | 50% |
| Example 1 | 0 | 0.5 | 0 | - | 1000 | 8 | Air | - | 800 | 10 | 50% |
| Example 2 | 0 | 0.5 | 0 | - | 1000 | 8 | Air | - | 820 | 10 | 55% |
| Example 3 | 0 | 0.5 | 0 | - | 1000 | 8 | Air | - | 840 | 10 | 60% |
| Example 4 | 0 | 0.5 | 0 | - | 1000 | 8 | Air | - | 860 | 10 | 70% |
| Example 5 | 0 | 0.5 | 0 | - | 1000 | 8 | Air | - | 880 | 10 | 80% |
| Example 6 | 0 | 0.5 | 0 | - | 1000 | 8 | Air | - | 900 | 10 | 90% |
| Comparative Example 2 | 0 | 0.5 | 0 | - | 1000 | 8 | Air | - | 950 | 10 | 70% |
| Comparative Example 3 | 0 | 0.5 | 0 | - | 1000 | 8 | Air | - | 860 | 10 | Air |
| Example 7 | 0 | 0.5 | 0 | - | 1000 | 8 | Air | - | 860 | 10 | 90% |
| Example 8 | 0 | 0.5 | 0 | - | 1000 | 8 | Air | - | 860 | 10 | 80% |
| Example 9 | 0 | 0.5 | 0 | - | 1000 | 8 | Air | - | 860 | 5 | 70% |
| Example 10 | 0 | 0.5 | 0 | - | 1000 | 8 | Air | - | 860 | 5 | 50% |
| Example 11 | 0 | 0.5 | 0.05 | Cr | 1000 | 8 | Air | - | 860 | 10 | 80% |
| Example 12 | 0 | 0.5 | 0.05 | Mo | 1000 | 8 | Air | - | 860 | 10 | 80% |
| Example 13 | 0 | 0.5 | 0.05 | Nb | 1000 | 8 | Air | - | 860 | 10 | 80% |
| Example 14 | 0 | 0.5 | 0.05 | Ru | 1000 | 8 | Air | - | 860 | 10 | 80% |
| Example 15 | 0 | 0.5 | 0.05 | P | 1000 | 8 | Air | - | 860 | 10 | 80% |
| Example 16 | 0 | 0.5 | 0.05 | Ta | 1000 | 8 | Air | - | 860 | 10 | 80% |
| Example 17 | 0 | 0.5 | 0.05 | Tl | 1000 | 8 | Air | - | 860 | 10 | 80% |
| Example 18 | 0 | 0.5 | 0.001 | Nb | 1000 | 8 | Air | - | 860 | 10 | 80% |
| Example 19 | 0 | 0.5 | 0.1 | Nb | 1000 | 8 | Air | - | 860 | 10 | 80% |
| Example 20 | 0 | 0.5 | 0.15 | Nb | 1000 | 8 | Air | - | 860 | 10 | 80% |
| Example 21 | 0 | 0.5 | 0.2 | Nb | 1000 | 8 | Air | - | 860 | 10 | 80% |
| Comparative Example 4 | 0 | 0.5 | 0.3 | Nb | 1000 | 8 | Air | - | 860 | 10 | 80% |
| Example 22 | -0.1 | 0.5 | 0 | - | 1000 | 8 | Air | - | 860 | 10 | 80% |
| Example 23 | 0.2 | 0.5 | 0 | - | 1000 | 8 | Air | - | 860 | 10 | 80% |
| Example 24 | 0 | 0.4 | 0 | - | 1000 | 8 | Air | - | 860 | 10 | 80% |
| Example 25 | 0 | 0.6 | 0 | - | 1000 | 8 | Air | - | 860 | 10 | 80% |
| Example 26 | 0 | 0.5 | 0 | - | - | - | - | Broken | 800 | 20 | 80% |
| Example 27 | 0 | 0.5 | 0 | - | 850 | 30 | Air | Broken | 800 | 15 | 80% |
| Example 28 | 0 | 0.5 | 0 | - | 900 | 50 | Air | Broken | 800 | 20 | 80% |
| Example 29 | 0 | 0.5 | 0 | - | 1050 | 20 | Air | - | 880 | 15 | 80% |
| Example 30 | 0 | 0.5 | 0 | - | 1100 | 30 | Air | - | 880 | 20 | 80% |
| Example 31 | 0.03 | 0.51 | 0.05 | Nb, Ru | 1000 | 8 | Air | - | 860 | 20 | 99% |

The physical and chemical parameters of each Example and Comparative Example are characterized by the following tests, and results are summarized in Table 2.
(1) Referring to EPA 6010D-2014 inductively coupled plasma atomic emission spectrometry, the content of each element in the positive electrode active material obtained in each Example and Comparative Example is measured, and a k value is calculated. In addition, an element content, a material structure, etc. may also be determined by XRD analysis, XRF analysis, and the like.
(2) Referring to an JY/T010-1996 test, a ZEISS sigma 300 scanning electron microscope is used to observe a morphology of the positive electrode active material obtained in each Example and Comparative Example, and whether the particle morphology is single crystal, single crystal-like or polycrystalline is judged. The particle morphology of the powders in the Examples of the present invention is single crystal or single crystal-like.
(3) Referring to a GB/T 19077-2016 particle size analysis laser diffraction method, a Mastersizer 3000 laser particle size analyzer is used to measure a volume median particle diameter D_{V50} of the positive electrode active material powder in each Example and Comparative Example.
(4) The following button-type battery test is performed on the positive electrode active material obtained in each Example and Comparative Example to obtain a first-cycle charging curve and calculate an A value, and the obtained A value is shown in Table 2.

First, with a lithium sheet as a counter electrode, according to the following steps, the lithium nickel manganese oxide positive electrode active material of the spinel structure of each Example or Comparative Example is assembled into a half battery (a button-type battery).
- The lithium nickel manganese oxide positive electrode active material of each Example or Comparative Example is mixed with conductive carbon black and PVDF at a weight ratio of 90:5:5, an appropriate amount of N-methyl pyrrolidone is added, and evenly stirring is performed to obtain a positive electrode slurry. The obtained positive electrode slurry is coated on an aluminum foil, and oven dried after coating to obtain a positive electrode sheet. Wherein a loading capacity of a lithium-nickel-manganese composite oxide on the positive electrode sheet is 0.015g/cm².
- A mixed solution of carbonate, fluorocarbonate and fluoroether containing 1 mol/L of LiPF₆ is used as an electrolyte solution.
- A polypropylene film (φ16 mm) with a thickness of 12 µm is used as a separator, and the lithium sheet, the separator, and the positive electrode sheet are placed in order, so that the separator is located between the metal lithium sheet and the composite negative electrode sheet to play a role of isolation.
- The electrolyte solution is injected, and a CR2030 button-type battery is assembled, and subjected to standing for 24 hours to obtain the half battery.

Then, at 25°C, the button type half battery prepared from the positive electrode active material of each Example and Comparative Example is charged at a constant current of 0.1 C to a voltage of 4.95 V, and a charging capacity of 4.4-3.5 V (Cl) and a charging capacity of 4.95-3.5 V (C2) are intercepted from original charging data.

Where, A=C1/C2.

**Table 2 Table of product parameters of a positive electrode active material of a spinel structure**

| Sample No. | Li₁₊ₓNi_{y}M_{z}Mn_{2-x-y-z}O₄₋ₖ | | Modified parameters | | | | |
|---|---|---|---|---|---|---|---|
| | Chemical formula | k | A | kA | k+A | D_{V50}/µm | P/(µm^{-0.3})^{[}*^{]} |
| Comparative Example 1 | Li_{1.00}Ni_{0.50}Mn_{1.50}O_{3.93} | 0.07 | 0.032 | 0.0022 | 0.102 | 6.6 | 0.058 |
| Example 1 | Li_{1.00}Ni_{0.50}Mn_{1.50}O_{3.93} | 0.07 | 0.040 | 0.0028 | 0.110 | 6.4 | 0.063 |
| Example 2 | Li_{1.00}Ni_{0.50}Mn_{1.50}O_{3.93} | 0.07 | 0.054 | 0.0038 | 0.124 | 6.7 | 0.070 |
| Example 3 | Li_{1.00}Ni_{0.50}Mn_{1.50}O_{3.93} | 0.07 | 0.070 | 0.0049 | 0.140 | 6.5 | 0.080 |
| Example 4 | Li_{1.00}Ni_{0.50}Mn_{1.50}O_{3.93} | 0.07 | 0.105 | 0.0074 | 0.175 | 6.9 | 0.098 |
| Example 5 | Li_{1.00}Ni_{0.50}Mn_{1.50}O_{3.93} | 0.07 | 0.150 | 0.0105 | 0.220 | 6.4 | 0.126 |
| Example 6 | Li_{1.00}Ni_{0.50}Mn_{1.50}O_{3.93} | 0.07 | 0.214 | 0.0150 | 0.284 | 6.6 | 0.161 |
| Comparative Example 2 | Li_{1.00}Ni_{0.50}Mn_{1.50}O_{3.91} | 0.09 | 0.225 | 0.0203 | 0.315 | 7.5 | 0.172 |
| Comparative Example 3 | Li_{1.00}Ni_{0.50}Mn_{1.50}O_{3.83} | 0.17 | 0.110 | 0.0187 | 0.280 | 6.6 | 0.159 |
| Example 7 | Li_{1.00}Ni_{0.50}Mn_{1.50}O_{3.97} | 0.03 | 0.106 | 0.0032 | 0.136 | 6.6 | 0.077 |
| Example 8 | Li_{1.00}Ni_{0.50}Mn_{1.50}O_{3.95} | 0.05 | 0.108 | 0.0054 | 0.158 | 6.6 | 0.090 |
| Example 9 | Li_{1.00}Ni_{0.50}Mn_{1.50}O_{3.90} | 0.10 | 0.109 | 0.0109 | 0.209 | 6.6 | 0.119 |
| Example 10 | Li_{1.00}Ni_{0.50}Mn_{1.50}O_{3.87} | 0.13 | 0.108 | 0.0140 | 0.238 | 6.6 | 0.135 |
| Example 11 | Li_{1.00}Ni_{0.50}Cr_{0.05}Mn_{1.45}O_{3.96} | 0.04 | 0.101 | 0.0040 | 0.141 | 6.3 | 0.081 |
| Example 12 | Li_{1.00}Ni_{0.50}Mo_{0.05}Mn_{1.45}O_{3.95} | 0.05 | 0.102 | 0.0051 | 0.152 | 6.2 | 0.088 |
| Example 13 | Li_{1.00}Ni_{0.50}Nb_{0.05}Mn_{1.45}O_{3.97} | 0.03 | 0.100 | 0.0030 | 0.130 | 6.8 | 0.073 |
| Example 14 | Li_{1.00}Ni_{0.50}Ru_{0.05}Mn_{1.45}O_{3.98} | 0.02 | 0.104 | 0.0021 | 0.124 | 6.4 | 0.071 |
| Example 15 | Li_{1.00}Ni_{0.50}P_{0.05}Mn_{1.45}O_{3.98} | 0.02 | 0.108 | 0.0022 | 0.128 | 6.5 | 0.073 |
| Example 16 | Li_{1.00}Ni_{0.50}Ta_{0.05}Mn_{1.45}0_{3.98} | 0.02 | 0.105 | 0.0021 | 0.125 | 6.7 | 0.071 |
| Example 17 | Li_{1.00}Ni_{0.50}Tl_{0.05}Mn_{1.45}O_{3.98} | 0.02 | 0.104 | 0.0021 | 0.124 | 6.3 | 0.071 |
| Example 18 | Li_{1.00}Ni_{0.50}Nb_{0.001}Mn_{1.499}O_{3.94} | 0.06 | 0.106 | 0.0064 | 0.166 | 6.6 | 0.094 |
| Example 19 | Li_{1.00}Ni_{0.50}Nb_{0.1}Mn_{1.40}O_{3.98} | 0.02 | 0.102 | 0.0020 | 0.122 | 6.9 | 0.068 |
| Example 20 | Li_{1.00}Ni_{0.50}Nb_{0.15}Mn_{1.35}O_{3.98} | 0.02 | 0.103 | 0.0021 | 0.123 | 6.7 | 0.070 |
| Example 21 | Li_{1.00}Ni_{0.50}Nb_{0.2}Mn_{1.30}O_{3.98} | 0.02 | 0.105 | 0.0021 | 0.125 | 6.5 | 0.071 |
| Comparative Example 4 | Li_{1.00}Ni_{0.50}Nb_{0.3}Mn_{1.20}O_{3.98} | 0.02 | 0.092 | 0.0018 | 0.112 | 6.8 | 0.063 |
| Example 22 | Li_{0.90}Ni_{0.50}Mn_{1.60}O_{3.87} | 0.13 | 0.114 | 0.0148 | 0.244 | 6.2 | 0.141 |
| Example 23 | Li_{1.20}Ni_{0.50}Mn_{1.30}O_{3.97} | 0.03 | 0.072 | 0.0022 | 0.102 | 6.1 | 0.059 |
| Example 24 | Li_{1.00}Ni_{0.40}Mn_{1.60}O_{3.92} | 0.08 | 0.126 | 0.0101 | 0.206 | 6.1 | 0.120 |
| Example 25 | Li_{1.00}Ni_{0.60}Mn_{1.40}O_{3.93} | 0.07 | 0.081 | 0.0057 | 0.151 | 6.9 | 0.085 |
| Example 26 | Li_{1.00}Ni_{0.50}Mn_{1.50}O_{3.94} | 0.06 | 0.041 | 0.0025 | 0.101 | 0.5 | 0.124 |
| Example 27 | Li_{1.00}Ni_{0.50}Mn_{1.50}O_{3.93} | 0.07 | 0.044 | 0.0031 | 0.114 | 1.2 | 0.108 |
| Example 28 | Li_{1.00}Ni_{0.50}Mn_{1.50}O_{3.92} | 0.08 | 0.048 | 0.0038 | 0.128 | 2.3 | 0.100 |
| Example 29 | Li_{1.00}Ni_{0.50}Mn_{1.50}O_{3.88} | 0.12 | 0.123 | 0.0148 | 0.243 | 14.8 | 0.108 |
| Example 30 | Li_{1.00}Ni_{0.50}Mn_{1.50}O_{3.87} | 0.13 | 0.124 | 0.0161 | 0.254 | 19.3 | 0.105 |
| Example 31 | Li_{1.03}Ni_{0.51}Nb_{0.03}Ru_{0.02}Mn_{1.41}O_{4.00} | 0 | 0.101 | 0.0000 | 0.101 | 6.7 | 0.057 |

| | | | | | | | |
|---|---|---|---|---|---|---|---|
| *: P=(k+A)/(D_{V50}^{0.3}) | | | | | | | |

It can be known from all the Examples and Comparative Examples that by sintering a raw material mixture that meets the conditions at a temperature of 800-900°C and under a condition of heat preservation in a furnace atmosphere of a positive pressure relative to an atmospheric pressure and an oxygen partial pressure ratio being >50% for 5-20 hours, a lithium nickel manganese oxide positive electrode active material with 0.04<A<0.3 and 0<kA<0.015 can be obtained, and the lithium nickel manganese oxide positive electrode active material has higher proportion of Fd3m space group structure and less oxygen defects.

It can be known from Examples 1-6 that by adjusting the sintering temperature at 800-900°C and matching the appropriate oxygen partial pressure, the finished spinel lithium nickel manganese oxide may be controlled to have an appropriate A value and kA value, that is, the spinel lithium nickel manganese oxide has the low oxygen defect and a suitable content of Fd3m structure, and a lithium ion battery using its finished product may balance kinetic performance and long-term storage performance. When the sintering temperature is not in the above range, it is impossible to balance the appropriate A value and the kA value. When the temperature is lower than 800°C, the A value is significantly reduced. For example, the sintering temperature of Comparative Example 1 is 670°C, and the A value is only 0.032, that is, the Fd3m content is too small, which is not conducive to the kinetic performance. However, when the temperature is too high, it is conducive to the generation of oxygen defects, so it is difficult to reduce the k value and kA value, which will intensify the side reactions between the positive electrode material and the electrolyte solution and the dissolution of Mn, and reduces the service life of the battery.

It can be known from Examples 7-10 and Comparative Example 2 that by prolonging the heat preservation time and increasing the oxygen partial pressure, the k value and the kA value can be reduced under the condition that the A value remains unchanged (the Fd3m structure content remains unchanged), that is, reducing the oxygen defects will be beneficial to the structural stability of the spinel lithium nickel manganese oxide and the service life of the battery.

It can be knows from Examples 11-17 that doping elements Cr, Mo, Nb, Ru, P, Ta, T1 may further reduce the k value (reduce the oxygen defects). This is because these elements may form strong bonds with oxygen, thus slowing down the oxygen release of the spinel lithium nickel manganese oxide at high temperature. Among them, the k values of Examples 13-17 are smaller, and it can be known that the effect of doping elements Nb, Ru, P, Ta, T1 on suppressing the oxygen defects is more significant.

It can be known from Examples 18-21 and Comparative Example 3 that the A value and the kA value can be better balanced through the content of the doping elements within the appropriate range. When the content of the doping elements is too high, that is, z>0.2, there is no further effect on the reduction of the oxygen defects, but the actual active materials of the material is significantly reduced due to the excessive doping amount, because the spinel structure LiM₂O₄ corresponding to these dopants is almost inactive, the charging and discharging capacity of the battery is affected.

It can be known from Examples 22-25 that the spinel lithium nickel manganese oxide with the appropriate A value and kA value may be obtained by properly adjusting the contents of Li, Ni, and Mn. This is because the Li, Ni, and Mn elements in the spinel lithium nickel manganese oxide may be partially replaced by entering into each other's positions.

It can be known from Examples 26-30 that the particle size of the particles may be controlled by adjusting the preparation process. With the increase of a maximum temperature and prolonging of the heat preservation time in pre-sintering and formal sintering in the preparation process, it is more prone to generate a single crystal and the grain size is more prone to increase, and the A value and kA value will also change accordingly. In addition, the crushing procedure before formal sintering can reduce the particle diameter D_{V50} and improve the dispersion, so that the single crystal-like is dispersed into single crystal-like closer to the single crystal or the single crystal.

It can be known from Example 31 that by comprehensively adjusting the sintering process, doping modification, and the content of main elements (Li, Ni, Mn), the single crystal spinel lithium nickel manganese oxide positive electrode active material with k=0 (without oxygen defects), appropriate A value (A=0.109, kA=0), and the appropriate particle size (D_{V50}=6.7 µm) may be obtained.

### [Preparation and Performance Test of Secondary Battery]

The lithium nickel manganese oxide positive electrode active material of each Example and Comparative Example is prepared into a graphite negative electrode soft pack battery according to the following methods, respectively, the discharge energy density ESC (Wh/Kg) at 5C rate and the normal temperature full-charge storage time ts (month) are tested, and the results are shown in Table 3.

### Preparation of a graphite negative electrode soft pack battery

(1) The lithium nickel manganese oxide positive electrode active materials of each Example or Comparative Example are mixed with conductive carbon black and PVDF at a weight ratio of 96:2.5:1.5, an appropriate amount of N-methyl pyrrolidone is added, and evenly stirring is performed to obtain a positive electrode slurry. The positive electrode slurry is coated on an aluminum foil, and oven dried after coating to obtain a positive electrode sheet. A loading capacity of a lithium-nickel-manganese composite oxide on the positive electrode sheet is 0.02 g/cm².
(2) A negative electrode active material artificial graphite, a conductive agent carbon black (Super P), a binder styrene butadiene rubber (SBR), a thickener sodium carboxymethyl cellulose (CMC-Na) at a mass ratio of 96:1:1:2 are sufficiently stirred and mixed in an appropriate amount of a solvent deionized water, to form a uniform negative electrode slurry; and the negative electrode slurry is uniformly coated on a surface of a negative electrode current collector copper foil, and then oven dried and cold pressed, to obtain a negative electrode sheet. A loading capacity of a negative electrode active material on one side of the negative electrode current collector is 0.008 g/cm².
(3) A mixed solution of carbonate, fluorocarbonate and fluoroether containing 1 mol/L of LiPF₆ is used as an electrolyte solution.
(4) A polypropylene film (φ16 mm) with a thickness of 12 µm is used as a separator, and the
above prepared positive electrode sheet, the separator, and the negative electrode sheet are placed in order, so that the separator is located between the positive electrode sheet and the negative electrode sheet to play a role of isolation. Winding forming is performed, and packaging is performed with an aluminum-plastic bag. The electrolyte solution is injected, packaged and then formed into capacity to obtain the graphite negative electrode soft pack battery.

### Electrical performance test of the graphite negative electrode soft pack battery

### (1) 5C Discharge gram capacity and 5C discharge energy density test of the positive electrode active material in the graphite negative electrode soft pack battery

At 25°C, the graphite negative electrode soft pack battery of each Example or Comparative Example is charged at a constant current of 0.3 C to a voltage of 4.9 V, then charged at a constant voltage of 4.9 V to a current of 0.05 C, and subjected to standing for 5 min, and then the soft pack battery is discharged at a constant current of 5C to a voltage of 3.5 V. The extracted corresponding discharge capacity and discharge energy are the 5C discharge capacity and 5C discharge energy of the soft pack battery. Dividing the capacity and the energy by mass (g) of positive electrode active material in the battery gives the 5C discharge gram capacity and 5C discharge energy density of the positive electrode active material, which are shown in Table 3, respectively. Compared with the conventional charge and discharge at a small rate of 0.33 C or 1 C, 5C is a large-rate current, which can better reflect the advantages and disadvantages of the kinetic performance of the material and battery, so the 5C discharge capacity and discharge energy density reflect the kinetic performance of the electrode material used for the secondary battery.

### (2) A soft pack normal temperature full-charge storage performance test of the secondary battery

At 25°C, the graphite negative electrode soft pack battery of each Example or Comparative Example is charged at a constant current of 0.3 C to a voltage of 4.9 V, and then charged at a constant voltage of 4.9 V to a current of 0.05 C. Then the secondary battery is placed at 25°C, full charge, full discharge and full charge are performed every 11 days, a discharge capacity value is extracted until the extracted discharge capacity decays to 80% of an initial value, and then the storage ends. The total storage time at 25°C after full charge is the normal temperature full-charge storage time ts, which is shown in Table 3. In the present application, the normal temperature full-charge storage time ts represents long-term stability of the material used for the secondary battery.

### (3) Calculation of an electrical performance comprehensive evaluation coefficient R

According to a logic of "full life range = single battery life × total life", the electrical performance comprehensive evaluation coefficient R is set to be equal to (E5C-440)×(ts-12)/100, where the two constants respectively represent the energy density of 440 Wh/kg and full-charge storage for 1 year and are basic conditions for the current material system to have application value. Where when an R value is negative, it is also denoted as 0. From this evaluation coefficient, the difference of battery performance may be comprehensively evaluated intuitively. The comprehensive evaluation coefficient values of the Examples and Comparative Examples are calculated, and the results are shown in Table 3.

**Table 3 Table of performance of a secondary battery**

| Sample No. | 5C discharge energy density E/(Wh/Kg) | Normal temperature full-charge storage ts/(month) | Comprehensive evaluation coefficient R |
|---|---|---|---|
| Comparative Example 1 | 443 | 25.1 | 0.4 |
| Example 1 | 486 | 28.3 | 7.5 |
| Example 2 | 497 | 27.2 | 8.7 |
| Example 3 | 515 | 25.9 | 10.4 |
| Example 4 | 532 | 23.4 | 10.5 |
| Example 5 | 523 | 18.8 | 5.6 |
| Example 6 | 521 | 16.5 | 3.6 |
| Comparative Example 2 | 512 | 14.3 | 1.7 |
| Comparative Example 3 | 531 | 11.6 | 0.0 |
| Example 7 | 534 | 25.9 | 13.1 |
| Example 8 | 545 | 24.8 | 13.4 |
| Example 9 | 536 | 18.8 | 6.5 |
| Example 10 | 533 | 16.2 | 3.9 |
| Example 11 | 567 | 24.1 | 15.4 |
| Example 12 | 541 | 27.8 | 15.9 |
| Example 13 | 537 | 30.7 | 18.1 |
| Example 14 | 541 | 31.2 | 19.4 |
| Example 15 | 531 | 32.8 | 18.9 |
| Example 16 | 523 | 33.7 | 18.0 |
| Example 17 | 526 | 34.3 | 19.2 |
| Example 18 | 533 | 26.8 | 13.8 |
| Example 19 | 527 | 34.9 | 19.9 |
| Example 20 | 498 | 35.8 | 13.8 |
| Example 21 | 478 | 33.2 | 8.1 |
| Comparative Example 4 | 405 | 31.5 | 0 |
| Example 22 | 528 | 18.3 | 5.5 |
| Example 23 | 502 | 27.9 | 9.9 |
| Example 24 | 523 | 20.1 | 6.7 |
| Example 25 | 508 | 27.4 | 10.5 |
| Example 26 | 553 | 15.6 | 4.1 |
| Example 27 | 545 | 18.1 | 6.4 |
| Example 28 | 542 | 19.2 | 7.3 |
| Example 29 | 518 | 21.0 | 7.0 |
| Example 30 | 513 | 21.2 | 6.7 |
| Example 31 | 537 | 37.8 | 25.0 |

It can be known by comparing the Examples and the Comparative Examples that the lithium nickel manganese oxide positive electrode active material Li₁₊ₓNi_{y}M_{z}Mn_{2-x-y-z}O₄₋ₖ with the A value meeting 0.04<A<0.3 and 0<kA<0.015 (0.1<x<0.2, 0.4<y<0.6, and 0<z<0.2) has both good 5C discharge energy density and normal temperature full-charge storage performance. It can be known from Comparative Example 1 that when A is less than 0.04, the 5C discharge energy density is low. It can be known from Comparative Example 2 and Comparative Example 3 that when the kA value is greater than 0.015, the good 5C discharge energy density and normal temperature full-charge storage performance cannot be balanced. It can be known from Comparative Example 4 that when the content of a doping element M is too high, the good 5C discharge energy density and normal temperature full-charge storage performance cannot be balanced.

Comparing Examples 1-10, when 0.11≤k≤0.22, the comprehensive evaluation coefficient R>5, and the good 5C discharge energy density and normal temperature full-charge storage performance are better balanced; and furthermore, when 0.11<k+A<0.18, R>6, and the comprehensive performance is further improved.

Comparing Examples 1-3 with Examples 11-17, doping of the M element improves the 5C discharge energy density and/or normal temperature full-charge storage performance of the material, and increases the value of the comprehensive evaluation coefficient R; and the modification effect for doping elements Nb, Ru, P, Ta, and T1 is more significant.

Comparing Example 13 and Examples 18-21, normal temperature storage of lithium nickel manganese oxide doped with Nb element with a content of z<0.2 is significantly improved, and the comprehensive evaluation coefficient R>8, thereby better balancing the good 5C discharge energy density and normal temperature full-charge storage performance; and lithium nickel manganese oxide doped with Nb element with a content of 0.001<z<0.15 has a comprehensive evaluation coefficient R>10, and has the better comprehensive performance.

Comparing Example 4 and Examples 26-30, each lithium nickel manganese oxide with a volume median particle diameter D_{V50} meeting 1 µm≤D_{V50}≤20 µm meets R>6, and well balances the good 5C discharge energy density and normal temperature full-charge storage performance; and the lithium nickel manganese oxide positive electrode active material with 2 µm≤D_{V50}≤15 µm meets R>7, and has the better comprehensive performance.

Comparing Examples 1-10 and Examples 27-30, when P=(k+A)/(D_{V50}^{0.3}) meets 0.06<P<0.12, the comprehensive evaluation coefficient R>6, and the good 5C discharge energy density and normal temperature full-charge storage performance are balanced; and furthermore, when 0.06< P≤0.10, R>7, and the comprehensive performance is further improved.

Comparing Example 31 with other Examples, the lithium nickel manganese oxide active material subj ected to comprehensive adjustment and control of A, kA, the doping elements, doping amounts, and the particle diameter balanced the good 5C discharge energy density and normal temperature full-charge storage performance.

## Claims

1. A lithium nickel manganese oxide positive electrode active material, wherein
a composition formula of the positive electrode active material is Liᵢ₊ₓNi_{y}M_{z}Mn_{2-x-y-z}O₄₋ₖ, - 0.1≤x≤0.2, 0.4<y<0.6, 0≤z≤0.2, and M is one or more of Cr, Mo, Nb, Ru, P, S, Ta, W, Tl, and Ti; and
in a first-cycle charging curve of a half battery of the positive electrode active material, a ratio of a charging capacity of 3.5 V-4.4 V to a charging capacity of 3.5 V-4.95 V is A, A meets 0.04<A<0.3, and a product of k and A meets 0≤kA≤0.015, wherein the first-cycle charging curve is measured at a rate of 0.1 C.

2. The lithium nickel manganese oxide positive electrode active material according to claim 1, wherein A and k meet the following relationship:
0.11<k+A<0.18, optionally, 0.11<k+A<0.15.

3. The lithium nickel manganese oxide positive electrode active material according to claim 1 or 2, wherein
0.07<A<0.15.

4. The lithium nickel manganese oxide positive electrode active material according to any one of claims 1 to 3, wherein
k meets 0≤k≤0.1, optionally, 0≤k≤0.05.

5. The lithium nickel manganese oxide positive electrode active material according to any one of claims 1 to 4, wherein z meets the following relationship:
0<z<0.2, optionally, 0.001<z<0.15.

6. the lithium nickel manganese oxide positive electrode active material according to any one of claims 1 to 5, wherein
M is selected from one or more than two of Nb, Ru, P, Ta, and Tl.

7. The lithium nickel manganese oxide positive electrode active material according to any one of claims 1 to 6, wherein
the lithium nickel manganese oxide positive electrode active material is single crystal and/or single crystal-like particles.

8. The lithium nickel manganese oxide positive electrode active material according to any one of claims 1 to 7, wherein
a volume median particle diameter D_{V50} of the particles of the positive electrode active material meets 1 µm<D_{V50}≤20 µm, optionally, 2 µm<D_{V50}≤15 µm.

9. The lithium nickel manganese oxide positive electrode active material according to claim 8, wherein
0.06≤(k+A)/(Dv₅₀^{0.3})≤0.12, optionally, 0.06≤(k+A)/(D_{V50}^{0.3})≤0.10, where (k+A)/(D_{V50}^{0.3}) is in µm^{-0.3}.

10. The lithium nickel manganese oxide positive electrode active material according to any one of claims 1 to 9, wherein
based on a total weight of an M element, more than 80% of the M element is located within a first 50% volume of the particles, optionally, within a first 30% volume, in a radial direction from a surface layer of the particles of the positive electrode active material to its geometric center.

11. A preparation method of a lithium nickel manganese oxide positive electrode active material, comprising the following steps:
S1: providing a compound or mixture containing lithium, nickel, and manganese, optionally, the compound or mixture containing an M element; and
S2: heating up the compound or mixture to 800-900°C in a furnace atmosphere where a pressure in a furnace is a positive pressure relative to an atmospheric pressure and an oxygen partial pressure ratio is >50%, for heat treatment for 5-20 hours to obtain the positive electrode active material, wherein
a composition formula of the positive electrode active material is Li₁₊ₓNi_{y}M_{z}Mn_{2-x-y-z}O₄₋ₖ, - 0.1≤x≤0.2, 0.4<y<0.6, 0≤z≤0.2, and M is one or more of Cr, Mo, Nb, Ru, P, S, Ta, W, Tl, and Ti; and
in a first-cycle charging curve of a half battery of the positive electrode active material, a ratio A of a charging capacity of 3.5 V-4.4 V to a charging capacity of 3.5 V-4.95 V meets 0.04<A<0.3, and a product kA of k and A meets 0<kA<0.015, wherein the first-cycle charging curve is measured at a rate of 0.1 C.

12. The preparation method according to claim 11, wherein
in S2, the oxygen partial pressure ratio is 80%-100%.

13. The preparation method according to claim 11 or 12, wherein
in S1, the compound or mixture containing the lithium, the nickel, and the manganese is subjected to heat treatment in an oxygen containing atmosphere at 800-1100°C for 5-50 hours.

14. The preparation method according to any one of claims 11 to 13, wherein
a nickel-manganese raw material in the mixture containing the lithium, the nickel, and the manganese is selected from one or more than two of Ni_{y}Mn_{2-x-y-z}(OH)_{4-2x-2z}, Ni_{y}Mn_{2-x-y-z}(CO₃)_{2-x-z}, Ni_{y}Mn_{2-x-y-z}O_{2-x-z}, Ni_{y}Mn_{2-x-y-z}O_{4-2x-2z}, (Ni_{y}Mn_{2-x-y-z})₃O_{4-2x-2z}, and Ni_{y}Mn_{2-x-y-z}[O(OH)]_{2-x-z}, - 0.1≤x≤0.2, 0.4<y<0.6, and 0≤z≤0.2.

15. A secondary battery, comprising the lithium nickel manganese oxide positive electrode active material according to any one of claims 1-10 or a lithium nickel manganese oxide positive electrode active material prepared by the preparation method according to any one of claims 11-14.

16. A battery module, comprising the secondary battery according to claim 15.

17. A battery pack, comprising the battery module according to claim 16.

18. An electrical apparatus, comprising at least one selected from the secondary battery according to claim 15, the battery module according to claim 16, or the battery pack according to claim 17.
